# EUROPÄISCHE PATENTSCHRIFT

(11) **EP 1 751 437 B1**
(45) Veröffentlichungstag und Bekanntmachung des Hinweises auf die Patenterteilung: **22.02.2012**
(21) Anmeldenummer: 05731899.0
(22) Anmeldetag: 06.04.2005
(51) Int. Cl.: F16B 41/00, G01D 11/30

(54) **POSITIONSMESSEINRICHTUNG**
POSITION MEASURING DEVICE
DISPOSITIF DE MESURE DE POSITION

(30) Priorität: 18.05.2004 DE 102004025192; 23.03.2005 DE 102005013364
(43) Veröffentlichungstag der Anmeldung: 14.02.2007
(73) Patentinhaber: Dr. Johannes Heidenhain GmbH, 83292 Traunreut (DE)
(72) Erfinder: HAGER, Andreas, 84558 Kirchweidach (DE); FIEDLER, Karl, 83313 Siegsdorf (DE); TAUBER, Johann, 83301 Traunreut (DE)
(86) Internationale Anmeldenummer: PCT/EP2005/003586
(87) Internationale Veröffentlichungsnummer: WO 2005/116461

(56) Entgegenhaltungen:
- EP-A- 0 526 681
- GB-A- 780 237
- US-A- 3 053 357
- US-B1- 6 415 524

## Beschreibung

Die Erfindung betrifft eine Positionsmesseinrichtung zur Bestimmung der Lage zweier zueinander beweglicher Baugruppen nach dem Oberbegriff des Anspruchs 1.

Eine derartige Positionsmesseinrichtung umfasst einen ersten Träger zur Aufnahme einer Maßverkörperung der Positionsmesseinrichtung, der zur Befestigung an einer der beiden zueinander beweglichen Baugruppen ausgebildet und vorgesehen ist, sowie einen zweiten Träger zur Aufnahme einer Abtasteinheit der Positionsmesseinrichtung, der zur Befestigung an der anderen der beiden zueinander beweglichen Baugruppen eingerichtet und vorgesehen ist, und ferner Verbindungsmittel zur Befestigung der beiden Träger an der jeweils zugeordneten Baugruppe. Dabei enthält mindestens eines der genannten Verbindungsmittel eine Schraube und eine zugehörige Mutter, wobei letztere in einer Ausnehmung des dem Verbindungsmittel zugeordneten Trägers angeordnet ist.

Die Ausnehmung ist vorteilhafterweise derart längserstreckt ausgebildet, dass die Mutter in der Ausnehmung zum Ausgleich von Toleranzen senkrecht zur Axialrichtung der zugehörigen Schraube verschiebbar ist.

Bei dem Positionsmesssystem kann es sich insbesondere um ein so genanntes Längenmesssystem handeln, bei dem die Maßverkörperung durch einen linearen Maßstab und die Abtasteinheit einen den Maßstab abtastenden (an einem Abtastwagen angeordneten) Abtastkopf aufweist. In diesem Fall handelt es sich bei dem ersten Träger des Positionsmesssystems in der Regel um ein längserstrecktes Gehäuse, in dem der lineare Maßstab fest und der Abtastwagen längsverschieblich aufgenommen sind, und bei dem zweiten Träger um einen mit dem Abtastwagen verbundenen, also gemeinsam mit diesem in der Erstreckungsrichtung des Gehäuses verschiebbaren Montagefuß. Indem das Gehäuse einerseits und der Montagefuß andererseits mit jeweils einer von zwei zueinander verschieblichen Baugruppen einer Maschine, insbesondere einer Werkzeugmaschine, verbunden werden, lässt sich mit dem Längenmesssystem eine Relativbewegung der beiden Baugruppen zueinander, der eine Relativbewegung des Montagefußes bezüglich des Gehäuses und damit des Abtastkopfes bezüglich des linearen Maßstabes entspricht, erfassen und in ihrem Ausmaß präzise bestimmen.

Bei dem Einbau eines solchen Positionsmesssystems (insbesondere Längenmesssystems) in eine Werkzeugmaschine, d.h. der Befestigung der beiden Träger (z.B. eines längserstreckten Gehäuses einerseits und eines Montagefußes andererseits) an den relativ zueinander beweglichen Baugruppen der Werkzeugmaschine (z.B. eines Maschinenbettes und einer Werkzeugaufnahme) steht häufig nur wenig Platz zwischen den einzelnen Maschinenteilen für die Durchführung der Montagearbeiten zu Verfügung. Es ist daher häufig nicht möglich, bei der Herstellung einer Mutter-Schraube-Verbindung die Mutter mit einem Werkzeug zu ergreifen und gegen ein Herausrutschen bzw. Herausfallen aus der zugeordneten Ausnehmung zu sichern, bis die zugehörige Schraube in das Innengewinde der Mutter eingeschraubt worden ist. Selbst für das Ergreifen der Mutter mit den Fingern steht häufig nicht hinreichend Platz zu Verfügung.

Der Erfindung liegt daher das Problem zugrunde, eine Positionsmesseinrichtung der eingangs genannten Art zu schaffen, bei der der Einbau in eine mit der Messeinrichtung auszurüstende Maschine erleichtert ist.

Dieses Problem wird erfindungsgemäß durch die Schaffung einer Positionsmesseinrichtung mit den Merkmalen des Anspruchs 1 gelöst.

Die erfindungsgemäße Lösung stellt mit kostengünstigen Mitteln ein Sperrelement zur Verfügung, welches die in die zugehörige Ausnehmung eingelegte Mutter gegen Herausfallen in axialer Richtung (bezogen auf die Erstreckungsrichtung der in die Mutter einzudrehenden Schraube) sichert.

Das Sperrelement ist beispielsweise eine Klammer. Unter einer Klammer soll dabei ein Einsteckteil verstanden werden, das sich auf bzw. in die Ausnehmung stecken lässt, in der die Mutter aufgenommen ist, und dabei eine Verbindung herstellt, so dass die Klammer bzw. das Einsteckteil an der Ausnehmung festgelegt ist und diese zur axialen Sicherung der Mutter überdeckt. Es handelt sich also bei der Klammer um ein (beliebiges) Einsteckteil, das sich derart an der die Mutter aufnehmenden Ausnehmung anordnen lässt, dass es einerseits die Mutter überdeckt und andererseits an der Ausnehmung festgelegt ist.

Eine Verschiebbarkeit der Mutter zu Zwecken des Toleranzausgleichs senkrecht zur Axialrichtung der zugehörigen Schraube in der Ausnehmung wird bevorzugt dadurch erreicht, dass diese mit einem gewissen Axialspiel (welches beliebig klein sein kann) in der Ausnehmung gelagert ist. Unter einer Lagerung mit Axialspiel wird dabei allgemein jede Lagerung der Mutter in der Ausnehmung verstanden, die aufgrund einer im wesentlichen losen Anordnung der Mutter in der Ausnehmung eine Verschiebung der Mutter senkrecht zur Axialen zulässt, selbst wenn in axialer Richtung selbst (wegen eines äußerst geringen axialen Spieles) keine substanzielle Bewegung möglich sein sollte. Demnach ist also vorteilhaft, dass die Mutter nicht derart (durch axial wirkende Kräfte) in der Ausnehmung (zwischen dem Boden der Ausnehmung und der Klammer) spielfrei eingeklemmt ist, dass sie sich nicht mehr entlang der Erstreckungsrichtung der Ausnehmung bewegen lässt.

Bei einer Anordnung der Mutter in der Ausnehmung zwischen der Bodenfläche der Ausnehmung und einer Anschlagfläche des Sperrelementes wird ein Axialspiel dadurch erreicht, dass der Abstand zwischen der Bodenfläche der Ausnehmung und der Anschlagfläche des Sperrelementes, an der sich die Mutter in axialer Richtung abstützen kann, größer oder gleich der Dicke der Mutter entlang dieser Richtung ist.

Nach einer bevorzugten Ausführungsform der Erfindung ist eine Klammer im Wesentlichen innerhalb der Ausnehmung angeordnet und insbesondere auch innerhalb der Ausnehmung an dieser festgelegt. Die Fixierung der Klammer erfolgt dabei vorteilhaft an einer umlaufenden Innenwand der Ausnehmung, die von der Bodenfläche der Ausnehmung absteht und auf ihrer der Bodenfläche abgewandten Seite die von der Klammer zu überdeckende bzw. zu verschließende Öffnung definiert. Die besagte Innenwand der Ausnehmung muss dabei nicht notwendig vollständig umlaufen; sie kann vielmehr auch eine oder mehrere Unterbrechungen in Umfangsrichtung aufweisen. Von Bedeutung ist, dass die Innenwand der Ausnehmung den äußeren Rand der Klammer zumindest teilweise umschließt.

Eine Fixierung der Klammer an der Innenwand der Ausnehmung lässt sich vorteilhaft dadurch erreichen, dass die Klammer mit einem scharfkantigen äußeren Rand derart (unter Vorspannung) gegen die Innenwand der Ausnehmung gedrückt wird, dass sie gegen ein Herausrutschen in axialer Richtung gesichert ist. Zur Aufbringung einer hinreichenden Vorspannung ist die Klammer dabei in mindestens einem Abschnitt elastisch deformierbar ausgestaltet.

Gemäß einer Ausführungsform der Erfindung weist die Klammer mindestens zwei von der Anschlagfläche für die Mutter abgewinkelte Abschnitte auf, die sich bevorzugt im Wesentlichen parallel zu jeweils einem Abschnitt der (umlaufenden) Innenwand der Ausnehmung erstrecken, wobei aus dem jeweiligen abgewinkelten Abschnitt der Klammer mindestens eine Lasche herausgeformt ist, die mit einer Kante auf die Innenwand der Ausnehmung einwirkt. Die Einwirkung der scharfen Kanten der Laschen auf die Innenwand der Ausnehmung erfolgt dabei entgegen der Richtung, entlang der die Klammer aus der Ausnehmung herausbewegbar ist, so dass die Klammer in axialer Richtung an der Innenwand festgelegt ist.

Gemäß einer anderen Ausführungsform der Erfindung ist der die Anschlagfläche für die Mutter bildende, sich senkrecht zur umlaufenden Innenwand der Ausnehmung erstreckende Grundkörper der Klammer derart elastisch deformierbar, dass er sich mit mindestens einer Kante, vorzugsweise mit mehreren Kanten seines (umlaufenden) äußeren Randes, an der Innenwand der Ausnehmung unter Vorspannung anlegt.

Hierzu kann der Grundkörper der Klammer einerseits derart biegbar ausgestaltet sein, dass er sich beim Einfügen in die Ausnehmung wölbt und dann im gewölbten Zustand mit mindestens einer scharfen Kante unter Vorspannung an der Innenwand der Ausnehmung anliegt. Alternativ können in dem Grundkörper der Klammer Schwächungsbereiche, insbesondere in Form von Durchgangslöchern, vorgesehen sein, so dass der Grundkörper beim Einstecken in die Ausnehmung in seiner Erstreckungsebene, d.h. im Wesentlichen senkrecht zur umlaufenden Innenwand der Ausnehmung, deformierbar ist und sich dann mit nach außen wirkender Vorspannung mit mindestens einer Kante an die Innenwand der Ausnehmung anlegt.

Gemäß einer weiteren Ausführungsform der Erfindung ist die Klammer formschlüssig, insbesondere nach Art einer Rastverbindung, an der Innenwand der Ausnehmung festgelegt. Hierzu können beispielsweise an der Klammer Rasthaken vorgesehen (angeformt) sein, die in entsprechende Hinterschnitte in der Innenwand der Ausnehmung eingreifen. Andererseits können an der Klammer ein oder mehrere Zapfen vorgesehen (ausgebildet) sein, die in zugeordnete Löcher in der Innenwand der Ausnehmung eingreifen.

Nach einer vorteilhaften Weiterbildung der Erfindung weist die Klammer in ihrem als Anschlagfläche für die Mutter dienenden Grundkörper ein Langloch auf, in das die zu der Mutter gehörende Schraube mit ihrem aus der Mutter herausragenden freien Ende eingreifen kann. Hierdurch wird gewährleistet, dass sich die Schraube zum Ausgleich von Fertigungs- und Montagetoleranzen gemeinsam mit der Mutter senkrecht zur axialen Richtung verschieben lässt.

Um das Eindrehen der Schraube in die zugehörige Mutter zu erleichtern, ist bevorzugt eine Verdrehsicherung vorgesehen, die eine Drehbewegung der Mutter in der Ausnehmung verhindert. Diese Verdrehsicherung kann zum einen in die Ausnehmung selbst integriert sein, insbesondere indem die Ausnehmung mit ihrer (z.B. mehreckigen) inneren Kontur (umlaufenden Innenwand) derart an die äußere Kontur der Mutter angepasst ist, dass sie eine Drehbewegung der Mutter in der Ausnehmung nicht zulässt.

Alternativ kann eine entsprechende Verdrehsicherung auch in die Klammer integriert sein, indem diese die Mutter formschlüssig umgreift, z.B. mittels an der Klammer vorgesehener Schenkel. Hierbei muss auch die Klammer wiederum verdrehsicher (formschlüssig) an der Ausnehmung festgelegt sein.

Weitere Einzelheiten und Vorteile der Erfindung werden bei der nachfolgenden Beschreibung von Ausführungsbeispielen anhand der Figuren deutlich werden.

Es zeigen:
- Fig. 1: einen schematischen Querschnitt durch ein Positionsmesssystem in Form eines Längemesssystems;
- Fig.2a: eine perspektivische Detaildarstellung des Positionsmesssystems aus Figur 1 mit einer Ausnehmung, in der eine zur Befestigung des Positionsmesssystems an einem Maschinenteil dienende Mutter aufgenommen ist;
- Fig. 2b: eine Rückansicht der Ausnehmung aus Figur 2a;
- Fig. 3a: eine perspektivische Darstellung eines ersten Ausführungsbeispiels eines Sperrelementes in Form einer Klammer zur Sicherung der Mutter in der Ausnehmung gemäß Figur 2a;
- Fig. 3b: eine perspektivische Draufsicht auf die Klammer gemäß Figur 3a nach dem Einsetzen in eine Ausnehmung gemäß Figur 2a;
- Fig. 3c: eine teilweise aufgebrochene perspektivische Darstellung der Anordnung aus Figur 3a;
- Figur 4a: ein zweites Ausführungsbeispiel einer Klammer, die zur axialen Sicherung einer Mutter in die Ausnehmung gemäß Figur 2a einsetzbar ist;
- Figur 4b: die Klammer aus Figur 4a im gewölbten Zustand;
- Figur 4c: eine perspektivische Draufsicht auf die Klammer aus Figur 4a nach dem Einsetzen in eine Ausnehmung gemäß Figur 2a;
- Figur 4d: eine teilweise aufgebrochene perspektivische Darstellung der Anordnung aus Figur 4c;
- Figur 5a: ein drittes Ausführungsbeispiel einer Klammer, die zur axialen Sicherung einer Mutter in die Ausnehmung gemäß Figur 2a einsetzbar ist;
- Figur 5b: eine perspektivische Draufsicht auf die Ausnehmung gemäß Figur 2a mit aufgesetzter Klammer gemäß Figur 5a;
- Figur 5c: eine teilweise aufgebrochene perspektivische Darstellung der Anordnung aus Figur 5b;
- Figur 6a: ein viertes Ausführungsbeispiel einer Klammer, die zur axialen Sicherung einer Mutter in die Ausnehmung gemäß Figur 2a einsetzbar ist;
- Figur 6b: eine teilweise aufgebrochene perspektivische Darstellung der Klammer aus Figur 6a in der Ausnehmung aus Figur 2a;
- Figur 7a: ein fünftes Ausführungsbeispiel einer Klammer, die zur axialen Sicherung der Mutter in die Ausnehmung gemäß Figur 7a einsetzbar ist;
- Figur 7b: eine teilweise aufgebrochene perspektivische Darstellung der Klammer aus Figur 7a nach dem Einsetzen in die Ausnehmung gemäß Figur 2a;
- Figur 8: ein Ausführungsbeispiel, bei dem das Sperrelement ein in die Mutter eingesetzter O-Ring ist;
- Figur 9: ein Ausführungsbeispiel, bei dem das Sperrelement eine elastische Beschichtung der Mutter ist;
- Figur 10: ein Ausführungsbeispiel, bei dem das Sperrelement ein in die Ausnehmung eingesetzter O-Ring ist und
- Figur 11: eine Schnittdarstellung A-A des Ausführungsbeispiels gemäß Figur 10.

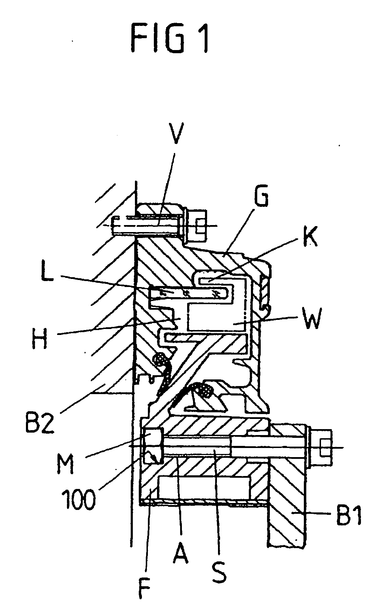

Figur 1 zeigt einen Querschnitt durch eine Positionsmesseinrichtung in Form eines Längenmesssystems, das zur Bestimmung der relativen Lage zweier entlang einer Längsrichtung zueinander beweglicher Baugruppen B1, B2 einer Werkzeugmaschine, z.B. des Maschinenbettes und einer Werkzeugbaugruppe, dient.

Das Längenmesssystem umfasst einen linearen Maßstab L, der in einem Hohlraum H eines in Längsrichtung E des Maßstabes L erstreckten Gehäuses G angeordnet ist, sowie eine durch einen auf einem Abtastwagen W angeordneten Abtastkopf K gebildete Abtasteinheit zum Abtasten einer auf dem Maßstab L aufgebrachten Messteilung. Die Messteilung ist bezüglich des linearen Maßstabs L entlang dessen Erstreckungsrichtung E verschieblich in dem Hohlraum H des Gehäuses G angeordnet und steht mit einem Montagefuß F in Verbindung. Der Montagefuß F einerseits und das Gehäuse G andererseits sind jeweils über geeignete Verbindungsmittel M, S bzw. V mit der zugeordneten Baugruppe B1 oder B2 der Werkzeugmaschine verbunden.

Die am Montagefuß F vorgesehenen und zu dessen Verbindung mit einer Baugruppe B1 der Werkzeugmaschine dienenden Verbindungsmittel umfassen eine Schraube S, die jeweils eine Durchgangsöffnung in den Montagefuß F einerseits und der entsprechenden Baugruppe B1 der Werkzeugmaschine andererseits durchgreift, sowie eine Mutter M, in deren Innengewinde die Schraube S mit ihrem Außengewinde A eingreift und die in einer Ausnehmung 100 des Montagefußes F gelagert ist.

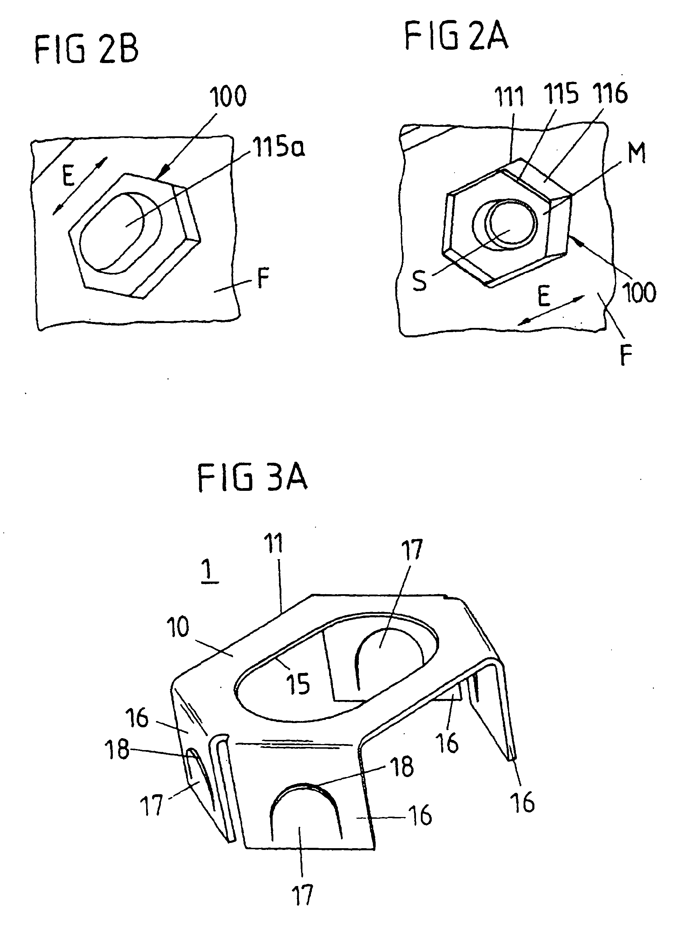

In den Figuren 2a und 2b ist die zur Aufnahme der Mutter M dienende Ausnehmung 100 des Montagefußes F vergrößert sowohl in einer perspektivischen Vorderansicht als auch in einer perspektivischen Rückansicht dargestellt, und zwar in Figur 2a zusammen mit der darin angeordneten Mutter M sowie der zugehörigen Schraube S.

Es ist erkennbar, dass die innere Kontur 111 der Ausnehmung 100 im Querschnitt mehreckig, nämlich sechseckig, gestaltet ist und eine umlaufende Innenwand 116 bildet, die in eine Bodenfläche 115 der Ausnehmung 100 mündet. Auf ihrer der Bodenfläche 115 abgewandten Seite bildet die Ausnehmung 100 eine Öffnung, durch die hindurch die Mutter M in die Ausnehmung 100 einsetzbar ist.

Die mehreckige innere Kontur 111 der Ausnehmung 100 ist derart an die ebenfalls mehreckige (sechseckige) äußere Kontur der Mutter M angepasst, dass diese in der Ausnehmung 100 nur begrenzt verdrehen kann, so dass die Mutter M beim Eindrehen der zugehörigen Schraube S in das Innengewinde der Mutter M im Wesentlichen drehfest in der Ausnehmung 100 des Montagefußes F gehalten werden kann.

Die Ausnehmung 100 weist in Erstreckungsrichtung E der Messanordnung, also insbesondere des linearen Maßstabes L und des Gehäuses G, vgl. Fig. 1, eine größere oder gleiche Ausdehnung auf als die Mutter M, so dass die Mutter M zum Ausgleich von Toleranzen bei der Montage noch entlang dieser Richtung E verschiebbar ist. Dadurch dass die Ausnehmung 100 in ihrer Bodenfläche 115 gemäß Figur 2b ein entlang jener Richtung E erstrecktes Langloch 115a aufweist, welches von der in Figur 2a gezeigten Schraube S durchgriffen wird, lässt sich die Schraube S zum Toleranzausgleich gemeinsam mit der Mutter M entlang der Erstreckungsrichtung E des Positionsmesssystems, vgl. Figur 1, verschieben.

Trotz der Sicherung der Mutter M gegen Verdrehen innerhalb der Ausnehmung 100, die das Eindrehen einer Schraube S in das Innengewinde der Mutter M erleichtert, besteht das Problem, dass die Mutter M in axialer Richtung -R (bezogen auf die Längserstreckung des mit dem Außengewinde A versehenen Gewindeabschnittes der Schraube S) aus der Ausnehmung 100 herausfallen kann, wenn sie nicht gegen axiales Herausrutschen aus der Ausnehmung 100 durch die der Bodenfläche 115 gegenüberliegenden Öffnung hindurch gesichert ist.

Figur 3a zeigt ein erstes Ausführungsbeispiel einer in die Ausnehmung 100 des Montagefußes F einsteckbaren Sperrelementes in Form einer Klammer 1, mit der die Mutter M gegen axiales Herausrutschen aus der Ausnehmung 100 des Montagefußes F sicherbar ist, wobei gleichzeitig die Beweglichkeit der Mutter M senkrecht zur Axialrichtung, also entlang der Erstreckungsrichtung E des Positionsmesssystems, nicht beeinträchtigt wird.

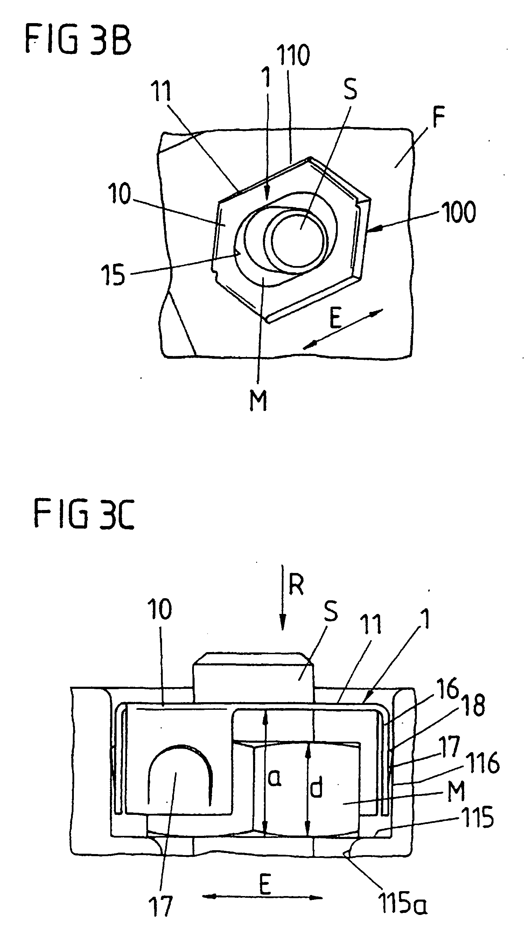

Die Klammer 1, die bevorzugt als ein Stanzteil aus Federblech ausgebildet sein kann, weist einen Grundkörper 10 auf, der eine an die innere Kontur 111 der Ausnehmung 100 angepasste äußere Kontur 11 aufweist und mit einem Langloch 15 versehen ist, das sich nach dem Einsetzen der Klammer 1 in die Ausnehmung 100 entlang der Erstreckungsrichtung E des Positionsmesssystems erstreckt, vgl. Figuren 3b und 3c.

Von dem Grundkörper 10 der Klammer 1 sind vier Abschnitte 16 in Form federnder Schenkel abgewinkelt, die sich im eingesetzten Zustand der Klammer 1 im Wesentlichen entlang jeweils eines gegenüberliegenden Abschnittes der Innenwand 116 der Ausnehmung 100 erstrecken. An jedem der Schenkel 16 ist durch Schneiden eine Lasche 17 ausgebildet, die unter Vorspannung von dem jeweiligen Schenkel 16 etwas nach außen (im eingesetzten Zustand in Richtung auf die Innenwand 116 der Ausnehmung 100, vgl. Figur 3c) absteht, und die an ihrem, oberen jeweils am zugeordneten Abschnitt der Innenwand 116 anliegenden Ende scharfkantig (mit einem scharfkantigen Abschnitt 18) ausgebildet ist.

Beim Einsetzen der Klammer 1 in die Ausnehmung 100 entlang der in Figur 3c angedeuteten Einfügerichtung R gleiten die nach außen abstehenden Laschen 17 der abgewinkelten Schenkel 16 entlang des jeweils zugeordneten Abschnitts der Innenwand 116 der Ausnehmung 100, wobei die Schenkel 16 und die Laschen 17 federnd nach innen nachgeben. Hierdurch lässt sich die Klammer 1 mit geringem Kraftaufwand in die Ausnehmung einbringen (eindrücken/einpressen).

Nach der Anordnung der Klammer 1 in der Ausnehmung 100, wie in den Figuren 3b und 3c dargestellt, werden die scharfkantigen Abschnitte 18 der Laschen 17 unter Vorspannung gegen den jeweils gegenüberliegenden Abschnitt der Innenwand 116 der Ausnehmung 100 gedrückt; und sie graben sich in den jeweiligen Abschnitt der Innenwand 116 ein, wenn auf die Klammer 1 eine axiale Kraft entgegen der Fügerichtung R ausgeübt wird, etwa weil die Mutter M bei der Montage gegen den Grundkörper 10 der Klammer 1 drückt. Durch diese Einwirkung der scharfkantigen Abschnitte 18 der Laschen 17 auf die Innenwand 116 der Ausnehmung 100 wird die Klammer 1 in axialer Richtung sicher in der Ausnehmung 100 gehalten. Dies bedeutet gleichzeitig, dass auch die Mutter M nicht in axialer Richtung aus der Ausnehmung 100 herausrutschen kann, da der Grundkörper 10 der Klammer 1 als axiale Anschlagfläche wirkt, die die Bewegung der Mutter M in axialer Richtung begrenzt und diese somit in der Ausnehmung 100 hält.

Anhand Figur 3c ist erkennbar, dass die Dicke d der Mutter M kleiner ist als der Abstand a des als Anschlagfläche dienenden Grundkörpers 10 der Klammer 1 von der Bodenfläche 115 der Ausnehmung 100. Hierdurch ist die Mutter M - zumindest vor dem Festziehen der Schraube S - mit axialem Spiel in der Ausnehmung 100 gelagert, so dass sie sich zu Zwecken des Toleranzausgleichs entlang der Erstreckungsrichtung E des Positionsmesssystems (also senkrecht zur axialen Erstreckung der Schraube S) verschieben lässt. Eine solche Verschiebebewegung kann von der Schraube S ohne weiteres nachvollzogen werden, da diese ein in der Bodenfläche 115 der Ausnehmung 100 erstrecktes Langloch 115a durchgreift, welches sich entlang jener Erstreckungsrichtung E erstreckt.

Die anhand der Figuren 3a bis 3c dargestellte Klammer 1 hat den Vorteil, dass sie als ein selbsthaltendes Einsteckteil in gängige Ausnehmungen 100 eines Montagefußes F einsetzbar ist, ohne dass die durch die Bodenfläche 115 und die Innenwand 116 gebildete Wandung der Ausnehmung 100 speziell zur Fixierung der Klammer 1 ausgelegt werden müsste. Die Fixierung der Klammer 1 in der Ausnehmung 100 wird vielmehr allein durch die Gestaltung der Klammer 1 mit entsprechenden scharfkantigen Abschnitten 118 erreicht, die sich in die umlaufende Innenwand 116 der Ausnehmung 100 eingraben können. Aufgrund der federelastischen Ausbildung der abgewinkelten Schenkel 116 und der Laschen 117 lassen sich hiermit auch größere Toleranzen hinsichtlich der äußeren Abmaße der Klammer 1 einerseits und der inneren Abmaße der Ausnehmung 100 andererseits kompensieren. Ferner wird die Beweglichkeit der Mutter M zu Zwecken des Toleranzausgleichs praktisch nicht beeinflusst, verglichen mit einer Anordnung ohne Klammer.

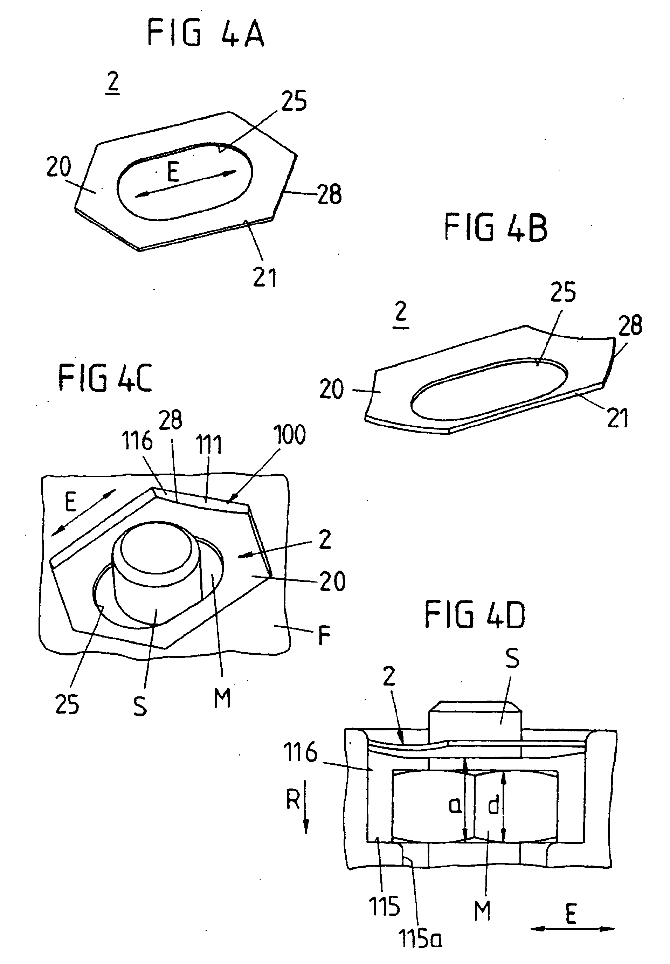

Figur 4a zeigt ein zweites Ausführungsbeispiel einer bevorzugt aus Federblech bestehenden Klammer 2, die aus einem Grundkörper 20 mit einer mehreckigen (sechseckigen) äußeren Kontur 21 besteht, der einerseits mit einem Langloch 25 und andererseits entlang der äußeren Kontur 21 mit scharfkantigen Abschnitten 28 versehen ist. Aufgrund ihrer elastischen Ausbildung lässt sich die Klammer 2 bei dem Einwirken entsprechender Biegekräfte ohne weiteres durch Biegung wölben, vgl. Figur 4b.

Die Klammer 2 ist so ausgestaltet, dass sie entlang einer Richtung, vorzugsweise entlang der Erstreckungsrichtung E des Positionsmesssystems, eine etwas größere Ausdehnung aufweist als die Aussparung 100, vgl. Figuren 4c und 4d. Hierdurch wirken beim Einfügen (Eindrücken) der Klammer 2 in die Ausnehmung 100 des Montagefußes F randseitige Kräfte an der äußeren Kontur 21 des Grundkörpers 20, die einem Einfügen der Klammer 2 in die Ausnehmung entgegenwirken. Aufgrund der beim Eindrücken/Einsetzen gleichzeitig in Fügerichtung R auf die Klammer 2 einwirkenden Kräfte wölbt sich deren Grundkörper 20 durch Biegung, wie in den Figuren 4c und 4d dargestellt, wobei die effektive Länge des Grundkörpers 20 der Klammer 2 entlang der Erstreckungsrichtung E etwas reduziert wird, so dass sich die Klammer 2 weiter in die Ausnehmung 1 hineindrücken lässt. Im Ergebnis liegt die Klammer 1 dann im gewölbten Zustand mit den scharfkantigen Abschnitten 28 ihrer äußeren Kontur 21 an der Innenwand 116 der Ausnehmung 100 an, so dass sie in der Ausnehmung 100 axial festgelegt ist.

Wie im vorhergehenden Ausführungsbeispiel ist auch hier der Abstand a zwischen dem Grundkörper 20 der Klammer 2 und der Bodenfläche 115 der Ausnehmung 100 größer als die Dicke d der Mutter M, so dass die Mutter M mit hinreichend Axialspiel zwischen der Bodenfläche 115 der Ausnehmung 100 und dem Grundkörper 20 der Klammer 2 gelagert ist, um einen Toleranzausgleich entlang einer Richtung E senkrecht zur Axialen zuzulassen.

Die anhand der Figuren 4a bis 4b beschriebene Klammer 2 zeichnet sich im Vergleich mit der in den Figuren 3a bis 3c gezeigten Klammer insbesondere durch den einfacheren Aufbau aus. Sie muss allerdings hinsichtlich ihrer äußeren Abmessungen, also der Gestaltung der äußeren Kontur 21, genauer an die innere Kontur 111 der Ausnehmung 100 angepasst sein, da die mit der Verwendung abgewinkelter federnder Schenkel einhergehenden Möglichkeiten der Kompensation größerer Toleranzen der genannten Abmaße entfallen.

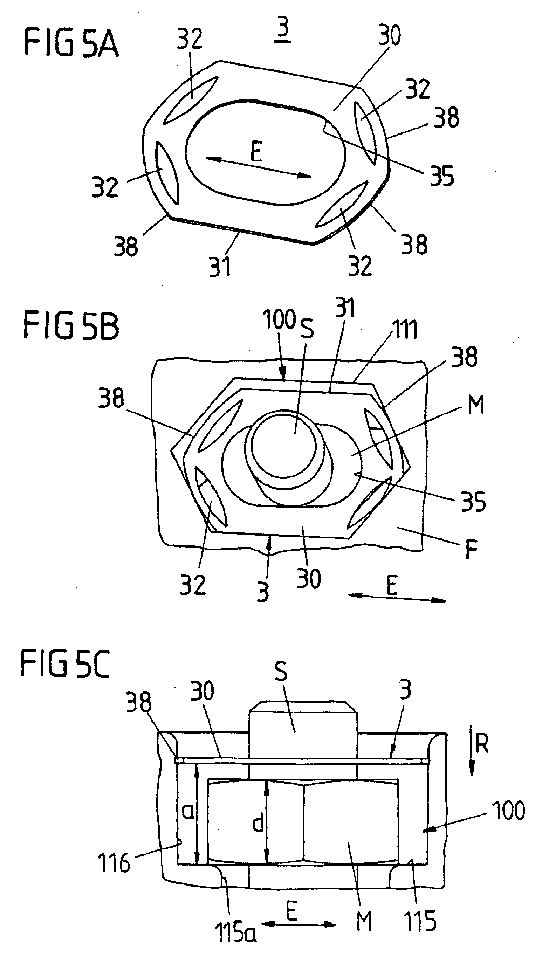

In den Figuren 5a bis 5c ist eine weitere aus Federblech bestehende Klammer 3 dargestellt, die sich - wie die in den Figuren 4a bis 4d gezeigte Klammer 2 - im Wesentlichen mit einem Grundkörper 30 in einer Ebene erstreckt und entlang einer Richtung, insbesondere der Erstreckungsrichtung E des Positionsmesssystems, eine etwas größere Ausdehnung aufweist als die Ausnehmung 100 des Montagefußes F.

Die Klammer 3 weist in ihrem Grundkörper 30 zusätzlich zu dem von der Schraube S zu durchgreifenden Langloch 35 vier Schwächungsbereiche 32 in Form länglicher Durchgangsöffnungen auf, die sich jeweils entlang eines scharfkantigen Abschnittes 38 der äußeren Kontur 31 des Grundkörpers 30 erstrecken. Dies ermöglicht eine Deformation des Grundkörpers 30 in seiner Erstreckungsebene beim Eindrücken in die Ausnehmung 100, wobei die scharfkantigen Abschnitte 38 etwas in die Schwächungsbereiche 32 hinein nach innen gedrückt werden, so dass sich die Klammer 3 unter elastischer Deformation ihres Grundkörpers 30 in die Ausnehmung 100 eindrücken lässt. Nach dem Einsetzen der Klammer 3 in die Ausnehmung 100 drücken deren scharfkantige Abschnitte 38 nach außen gegen die Innenwand 116 der Ausnehmung 100, so dass die Klammer 3 in der Ausnehmung 100 fixiert ist.

Im Übrigen stimmt das anhand der Figuren 5a bis 5c dargestellte Ausführungsbeispiel, insbesondere hinsichtlich der Funktion der Klammer 3, mit den bereits anhand der Figuren 3a bis 3c und 4a bis 4d dargestellten überein, so dass für weitere Einzelheiten auf die diesbezüglichen Erläuterungen verwiesen wird.

Hinsichtlich ihrer besonderen Vorteile entspricht die in den Figuren 5a bis 5c dargestellte Klammer mit der in den Figuren 4a bis 4d gezeigten, da es sich ebenfalls um ein einfach und kostengünstig herstellbares, ebenes Blechteil handelt, bei dem auf die Anpassung der äußeren Kontur 31 der Klammer 1 an die innere Kontur 111 der Ausnehmung 100 zu achten ist.

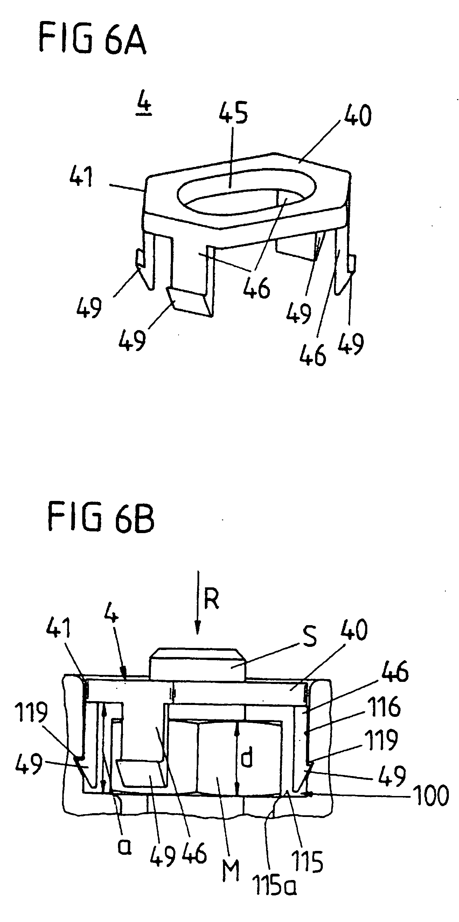

In den Figuren 6a und 6b ist ein Ausführungsbeispiel einer Klammer 4 dargestellt, die einen von einer mehreckigen (sechseckigen) Kontur 41 umschlossenen Grundkörper 40 mit einem Langloch 45 aufweist, von dem vier mit Rastvorsprüngen 49 versehenen Rasthaken 46 (im Wesentlichen senkrecht) abstehen. Den Rastvorsprüngen 49 der Rasthaken 46 sind entsprechende Hinterschnitte 119 in der umlaufenden Innenwand 116 der Ausnehmung 100 des Montagefußes zugeordnet, so dass die Klammer 4 durch eine Rastverbindung an der Wandung 115, 116 der Ausnehmung 100, insbesondere an deren Innenwand 116, festlegbar ist. Das Einführen der Klammer 4 in die Ausnehmung 100 wird durch eine federelastische Gestaltung der Rasthaken 46 ermöglicht, die sich beim Einführen der Klammer 4 in die Ausnehmung 100 nach innen wegbiegen lassen und dann mit ihren Rastabschnitten 49 in die Hinterschnitte 119 der Innenwand 116 einrasten.

Die in den Figuren 6a und 6b gezeigte Klammer kann vorteilhaft auch als Kunststoffteil ausgebildet sein, da keine scharfkantigen Abschnitte der äußeren Kontur 41 benötigt werden, um die Rastverbindung mit der Innenwand 116 der Ausnehmung 100 herzustellen, die ja durch Einschnappen der Rastvorsprünge 49 in die zugeordneten Hinterschnitte 119 erfolgt. Somit lässt sich die Klammer 4 kostengünstig durch Spritzgießen (als Spritzgussteil) herstellen, wobei durch die federelastische Ausgestaltung der Rasthaken 46 gleichzeitig größere Toleranzen bezüglich der äußeren Abmaße der Klammer 4 einerseits und der inneren Abmaße der Ausnehmung 100 andererseits ausgleichbar sind.

Die Verwendung einer mit Rasthaken 46 versehenen Klammer 4 erfordert allerdings, dass in der Ausnehmung 100 des Montagefußes entsprechende Rastöffnungen, insbesondere in Form von Hinterschnitten 119, gefertigt werden. Dies ist insbesondere dann leicht möglich, wenn der Montagefuß durch Fräsen hergestellt wird, wobei sich entsprechende Rastöffnungen leicht erzeugen lassen.

Der Platzbedarf der Rasthaken 46 kann zu einer gewissen Reduktion des Umfanges des Toleranzausgleiches führen, der entlang der Erstreckungsrichtung E des Positionsmesssystems durch Verschieben der Mutter M möglich ist, während bei den in den Figuren 4a bis 4d und 5a bis 5c gezeigten, ebenen Klammern 2, 3 der Toleranzausgleich überhaupt nicht beeinflusst wird.

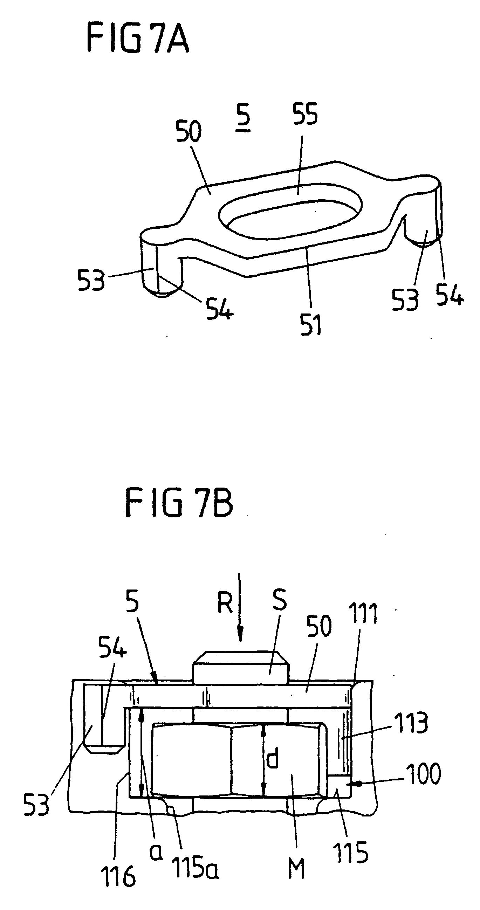

Letzteres gilt auch für die in den Figuren 7a und 7b dargestellte Klammer 5, bei der es sich wiederum um ein kostengünstig aus Kunststoff hergestelltes Spritzgussteil handeln kann. Dieses umfasst einen durch eine mehreckige (sechseckige) äußere Kontur 51 begrenzten flächigen Grundkörper 50 mit einem Langloch 55, von dem senkrecht zwei mit Rippen 54 versehene Zapfen 53 abstehen. Den Zapfen 53 sind entsprechende Löcher 113 in Form von Bohrungen in der Umgebung der Ausnehmung 100 zugeordnet, in die sich die Zapfen 53 einstecken lassen, wobei die Rippen 54 gegen die Außenwände der Bohrungen 113 drücken und so für eine zuverlässige Fixierung der Klammer 5 durch Eingriff der Zapfen 53 in die zugeordneten Bohrungen 113 sorgen.

Im Vergleich zu der anhand der Figuren 6a und 6b dargestellten, ebenfalls als Spritzgussteil herstellbaren Klammer 4 zeichnet sich die in den Figuren 7a und 7b gezeigte, durch eine Steckverbindung an der Ausnehmung 100 festlegbare Klammer 5 vor allem dadurch aus, dass das Ausmaß des Toleranzausgleichs durch Verschiebung der Mutter M in der Ausnehmung 100 entlang einer Erstreckungsrichtung E des Positionsmesssystems nicht beeinträchtigt wird. Allerdings ist hier eine zusätzliche Bearbeitung des Materials in der Umgebung der Ausnehmung 100 erforderlich, indem dort zur Aufnahme der Zapfen 53 geeignete Löcher 113 erzeugt werden.

Im Übrigen stimmen die anhand der Figuren 6a und 6b sowie der Figuren 7a und 7b beschriebenen Klammern 4, 5, insbesondere hinsichtlich ihrer Funktion, mit den anhand der Figuren 3a bis 3c, 4a bis 4d und 5a bis 5c erläuterten Klammern 1, 2, 3 überein, so dass für weitere Einzelheiten auf die diesbezügliche Beschreibung verwiesen wird.

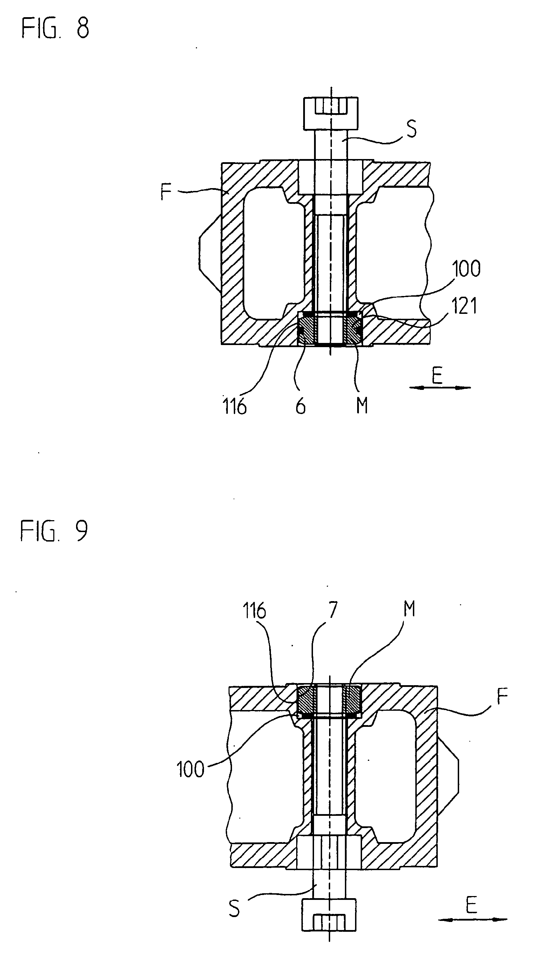

Die Figuren 8 und 9 zeigen zwei Ausführungsbeispiele, bei denen die Mutter M durch umfangsmäßiges Klemmen in der Ausnehmung 100 gegen axiales Herausfallen aus der Ausnehmung 100 gesichert ist. Dabei ist es besonders vorteilhaft, wenn das Sperrelement 6, 7 zwischen der Mutter M und der Innenwand 116 der Ausnehmung 100 angeordnet ist und aus elastisch nachgiebigen Material beispielsweise Kunststoff besteht.

In Figur 8 ist in der Mutter M über den Umfang eine Nut 121 eingebracht, in der ein O-Ring 6 als Sperrelement eingesetzt ist. Gemäß Figur 9 ist das Sperrelement eine am Außenumfang der Mutter M aufgebrachte elastisch nachgiebige Beschichtung 7. Diese Beschichtung kann beispielsweise durch Aufvulkanisieren geschaffen werden.

Eine elastische Zwischenlage 6, 7 zwischen der Mutter M und der Innenwand 116 der Ausnehmung 100 hat den Vorteil, dass Fertigungstoleranzen von Mutter M und Ausnehmung 100 ausgeglichen werden und trotzdem die Mutter M in der Ausnehmung 100 sicher radial geklemmt ist. Darüber hinaus ist ein einfaches Einsetzen und wieder Herausnehmen der Mutter M aus der Ausnehmung 100 gewährleistet. Ein weiterer Vorteil besteht darin, dass sich die Mutter M beim Einschrauben der Schraube S in der Ausnehmung 100 der Lage der Schraube S anpassen kann, indem sich die Mutter M senkrecht zur axialen Richtung der zugehörigen Schraube S bewegen lässt. Der mögliche Bewegungsweg ist abhängig von der Dicke und der Elastizität der Beschichtung 7 bzw. des O-Ringes 6 und wird entsprechend den Anforderungen gewählt.

Die elastische Beschichtung 7 kann alternativ auch an der Innenwand 116 der Ausnehmung 100 angeordnet sein. Ebenso kann der O-Ring 6 alternativ in einer Nut der Innenwand 116 der Ausnehmung 100 eingebracht sein.

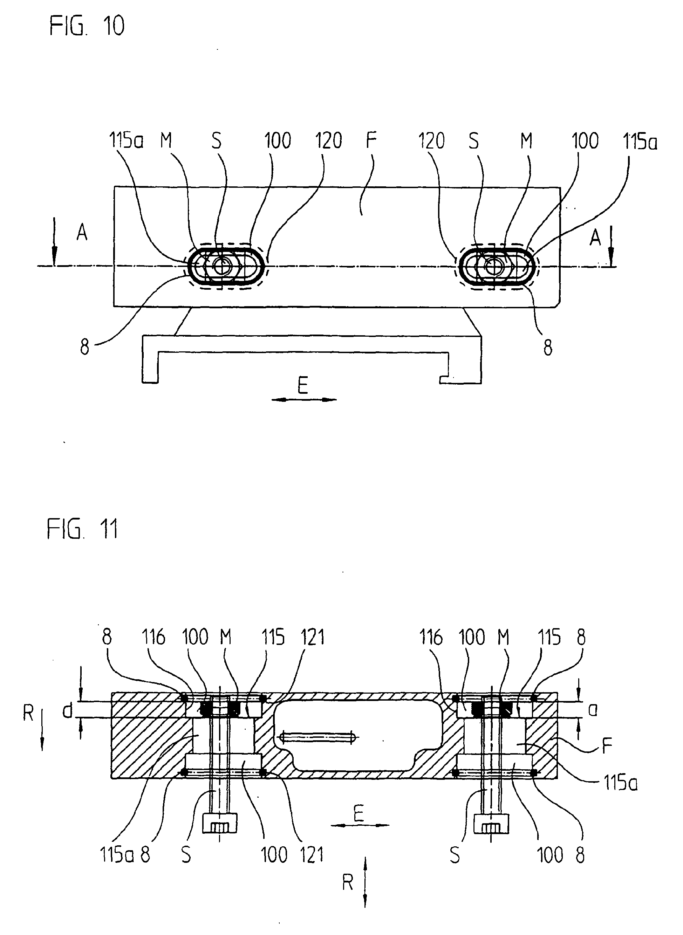

Die Figuren 10 und 11 zeigen ein besonders vorteilhaftes Ausführungsbeispiel. In einem Abstand a vom Boden 115 der Ausnehmung 100 entfernt ist ein Sperrelement in Form eines zumindest in radialer Richtung (Richtung senkrecht zu R) aufweitbaren Elementes 8 angeordnet. Im dargestellten Beispiel ist dieses Element ein elastisch nachgiebiger O-Ring 8 in einer Nut 121 der Ausnehmung 100. Der Abstand a zwischen dem Boden 115 der Ausnehmung 100 und dem O-Ring 8 ist in axialer Richtung R größer oder zumindest gleich der Dicke der Mutter M. Dies hat den Vorteil, dass die Mutter M sich im in die Ausnehmung 100 eingelegten Zustand in Richtung E in der längserstreckten Ausnehmung 100 verschieben lässt.

Der O-Ring 8 begrenzt somit die Zugangsöffnung der Ausnehmung 100 umfangsmäßig derart, dass er einen überwindbaren Widerstand beim Eindrücken der Mutter M auf diese ausübt. Die Eindrückkraft der Mutter M führt zu einem radialen Aufweiten des O-Ringes 8 und einer Freigabe der Zugangsöffnung der Ausnehmung 100 für die Mutter M. Ist die Mutter M vollständig in die Ausnehmung 100 eingedrückt entspannt sich der O-Ring 8 hinter der Mutter M wieder und gibt die Mutter M umfangsmäßig frei. Durch die Entspannung des O-Ringes 8 schließt sich die Zugangsöffnung und bildet eine Sperre für die Bewegung der Mutter M in axialer Richtung R.

Die in den Figuren 8 bis 11 gezeigten Beispiele haben den Vorteil, dass das Sperrelement 6, 7, 8 derart ausgebildet und angeordnet ist, dass es bereits beim Einsetzen der Mutter M in die Ausnehmung 100 an der Ausnehmung 100 oder an der Mutter M angebracht sein kann. Der Hersteller der Positionsmesseinrichtung kann dadurch eine einbaufertige Vorrichtung zur Verfügung stellen, ohne dass es vom Anwender bei der Montage zusätzliche Arbeitsschritte erfordert.

## Patentansprüche

1. Positionsmesseinrichtung zur Bestimmung der Lage zweier zueinander beweglicher Baugruppen (B1, B2), mit
- einem ersten Träger (G) zur Aufnahme einer Maßverkörperung (L) der Positionsmesseinrichtung, der zur Befestigung an einer der beiden Baugruppen (B2) eingerichtet und vorgesehen ist,
- einem zweiten Träger (F) zur Aufnahme einer Abtasteinheit (K) der Positionsmesseinrichtung, der zur Befestigung an der anderen der beiden Baugruppen (B1) eingerichtet und vorgesehen ist, und
- Verbindungsmitteln (S, M) zur Befestigung der beiden Träger (G, F) mit der jeweils zugeordneten Baugruppe (B1, B2), wobei
- mindestens eines der Verbindungsmittel eine Mutter (M) umfasst, mit der eine Schraube (S) in Eingriff bringbar ist,
- die Mutter (M) in eine Ausnehmung (100) eines der beiden Träger (G, F) einlegbar ist,
**gekennzeichnet durch**
ein Sperrelement (1, 2, 3, 4, 5, 6, 7, 8), welches mit der Mutter (M) im eingelegten Zustand zusammenwirkt, um eine Bewegung der Mutter (M) in axialer Richtung (-R) aus der Ausnehmung (100) heraus soweit zu verhindern, dass ein Einsetzen der Schraube in die Mutter (M) ermöglicht ist.

2. Positionsmesseinrichtung nach Anspruch 1, **dadurch gekennzeichnet, dass** das Sperrelement eine Klammer (1, 2, 3, 4, 5) ist, von der die Ausnehmung (100) überdeckt ist und dass die Mutter (M) in der Ausnehmung (100) zwischen einem Boden (115) der Ausnehmung (100) und einer Anschlagfläche (10, 20, 30, 40, 50) der Klammer (1, 2, 3, 4, 5) angeordnet ist.

3. Positionsmesseinrichtung nach Anspruch 2, **dadurch gekennzeichnet, dass** der Abstand (a) zwischen dem Boden (115) der Ausnehmung (100) und der Anschlagfläche (10, 20, 30, 40, 50) der Klammer (1, 2, 3, 4, 5) in axialer Richtung größer ist als die Dicke (d) der Mutter (M).

4. Positionsmesseinrichtung nach einem der vorhergehenden Ansprüche 2 oder 3, **dadurch gekennzeichnet, dass** die Klammer (1, 2, 3, 4, 5) in der Ausnehmung (100) angeordnet und fixiert ist.

5. Positionsmesseinrichtung nach Anspruch 4, **dadurch gekennzeichnet, dass** die Klammer (1, 2, 3, 4, 5) an der Wandung (115, 116), insbesondere an einer zumindest teilweise umlaufenden Innenwand (116), der Ausnehmung (100) festgelegt ist.

6. Positionsmesseinrichtung nach Anspruch 5, **dadurch gekennzeichnet, dass** die Klammer (1, 2, 3) derart mit mindestens einer Kante (18, 28, 38) gegen die Innenwand (116) der Ausnehmung (100) drückt, dass sie in der Ausnehmung (100) fixiert ist.

7. Positionsmesseinrichtung nach Anspruch 6, **dadurch gekennzeichnet, dass** die Klammer (1, 2, 3) in mindestens einem Teilbereich derart elastisch deformierbar ist, dass sie mit der jeweiligen Kante (18, 28, 38) unter Vorspannung gegen die Innenwand (116) der Ausnehmung (100) drückt.

8. Positionsmesseinrichtung nach Anspruch 6 oder 7, **dadurch gekennzeichnet, dass** die Klammer (1) mindestens zwei abgewinkelte Abschnitte (16) aufweist, die sich entlang der Innenwand (116) der Ausnehmung (100) erstrecken, und dass an dem jeweiligen abgewinkelten Abschnitt (16) mindestens eine Lasche (17) vorgesehen ist, die mit einer Kante (18) auf die Innenwand (116) der Ausnehmung (100) einwirkt.

9. Positionsmesseinrichtung nach Anspruch 6, **dadurch gekennzeichnet, dass** die Klammer (2, 3) einen im Wesentlichen flächigen Grundkörper (20, 30) aufweist, der derart elastisch deformierbar ist, dass er mit mindestens einer äußeren Kante (28, 38) unter Vorspannung an der Innenwand (116) der Ausnehmung (100) anliegt.

10. Positionsmesseinrichtung nach Anspruch 4, **dadurch gekennzeichnet, dass** die Klammer (4, 5) formschlüssig an der Ausnehmung (100) festlegbar ist.

11. Positionsmesseinrichtung nach Anspruch 10, **dadurch gekennzeichnet, dass** die Klammer (4, 5) durch eine Rastverbindung (49, 119) und/oder durch eine Steckverbindung (53, 113) an der Ausnehmung (100) festlegbar ist.

12. Positionsmesseinrichtung nach Anspruch 11, **dadurch gekennzeichnet, dass** die Rastverbindung mindestens einen Rasthaken (46) umfasst, der mit einem Rastabschnitt (49) in einen Hinterschnitt (119) eingreift, wobei der mindestens eine Rasthaken (46) an der Klammer (4) und die Rastöffnung (119) an der Innenwand (116) der Ausnehmung (100) vorgesehen ist.

13. Positionsmesseinrichtung nach Anspruch 10, **dadurch gekennzeichnet, dass** zur Festlegung der Klammer (5) an der Ausnehmung (100) mindestens ein Zapfen (53) in ein zugeordnetes Loch (113) eingreift, wobei der Zapfen (53) an der Klammer (5) und das Loch (113) in der Umgebung der Ausnehmung (100) vorgesehen ist.

14. Positionsmesseinrichtung nach einem der vorhergehenden Ansprüche 2 bis 13, **dadurch gekennzeichnet, dass** die Klammer (1, 2, 3, 4, 5) in einem Grundkörper (10, 20, 30, 40, 50) ein Langloch (15, 25, 35, 45, 55) aufweist, in das die Schraube (S) hineinragen kann.

15. Positionsmesseinrichtung nach einem der vorhergehenden Ansprüche 2 bis 14, **dadurch gekennzeichnet, dass** die Klammer (1, 2, 3, 4, 5) derart ausgebildet ist, dass sie als Verdrehsicherung wirkt, die einem Verdrehen der Mutter (M) in der Ausnehmung (100) entgegenwirkt.

16. Positionsmesseinrichtung nach Anspruch 15, **dadurch gekennzeichnet, dass** die Klammer (1, 2, 3, 4, 5) Mittel zum formschlüssigen Umgreifen der Mutter (M) aufweist.

17. Positionsmesseinrichtung nach Anspruch 1, **dadurch gekennzeichnet, dass** die Mutter (M) mittels des Sperrelementes (6, 7) in der Ausnehmung (100) klemmbar ist.

18. Positionsmesseinrichtung nach Anspruch 1, **dadurch gekennzeichnet, dass** das Sperrelement (6, 7, 8) derart ausgebildet und angeordnet ist, dass es bereits beim Einsetzen der Mutter (M) in die Ausnehmung (100) wirksam ist, indem das Sperrelement (6, 7, 8) bereits beim Einsetzen der Mutter (M) in die Ausnehmung (100) an der Ausnehmung (100) oder an der Mutter (M) angebracht ist.

19. Positionsmesseinrichtung nach Anspruch 17 oder 18, **dadurch gekennzeichnet, dass** das Sperrelement ein elastisch nachgiebiges Mittel (6, 7) ist, das zwischen der Innenwand (116) der Ausnehmung (100) und dem Außenumfang der Mutter (M) angeordnet ist, und durch das die Mutter (M) in der Ausnehmung klemmbar ist.

20. Positionsmesseinrichtung nach Anspruch 19, **dadurch gekennzeichnet, dass** das elastisch nachgiebige Mittel ein O-Ring (6) ist.

21. Positionsmesseinrichtung nach Anspruch 20, **dadurch gekennzeichnet, dass** der O-Ring (6) in einer Nut (120) in der Ausnehmung (100) oder in einer Nut (121) in der Mutter (M) gehalten ist.

22. Positionsmesseinrichtung nach Anspruch 19, **dadurch gekennzeichnet, dass** das elastisch nachgiebige Mittel eine elastische Beschichtung (7) der Mutter (M) oder der Ausnehmung (100) ist.

23. Positionsmesseinrichtung nach Anspruch 1, **dadurch gekennzeichnet, dass** das Sperrelement ein elastisch nachgiebiges Element (8) ist, das die Zugangsöffnung der Ausnehmung (100) für das Einlegen der Mutter (M) über den Umfang begrenzt und beim Einlegen der Mutter (M) einen überwindbaren Widerstand auf die Mutter (M) ausübt, aber die Mutter (M) umfangmäßig freigibt, wenn die Mutter in die Ausnehmung (100) eingelegt ist.

24. Positionsmesseinrichtung nach Anspruch 23, **dadurch gekennzeichnet, dass** das elastisch nachgiebige Element ein O-Ring (8) ist.

25. Positionsmesseinrichtung nach Anspruch 24, **dadurch gekennzeichnet, dass** der O-Ring (8) in einer Nut (121) in der Ausnehmung (100) gehalten ist.

26. Positionsmesseinrichtung nach einem der Ansprüche 23 bis 25, **dadurch gekennzeichnet, dass** der Abstand (a) zwischen dem Boden (115) der Ausnehmung (100) und dem Sperrelement (8) in axialer Richtung (R) größer oder gleich ist als die Dicke (d) der Mutter (M).

27. Positionsmesseinrichtung nach einem der vorhergehenden Ansprüche, **dadurch gekennzeichnet, dass** die geometrische Gestaltung der Ausnehmung (100) eine Verdrehsicherung bildet, die einem Verdrehen der Mutter (M) in der Ausnehmung (100) entgegenwirkt.

28. Positionsmesseinrichtung nach einem der vorhergehenden Ansprüche, **dadurch gekennzeichnet, dass** sie als Längenmesseinrichtung mit einer linearen Maßverkörperung (L) ausgebildet ist.

29. Positionsmesseinrichtung nach Anspruch 28, **dadurch gekennzeichnet, dass** der erste Träger durch ein Gehäuse (G) der linearen Maßverkörperung (L) gebildet wird und der zweite Träger durch einen Montagefuß (F) gebildet wird, mit dem die die Maßverkörperung (L) abtastende Abtasteinheit (K, W) verbunden ist.

30. Positionsmesseinrichtung nach einem der vorhergehenden Ansprüche, **dadurch gekennzeichnet, dass** die Ausnehmung derart längserstreckt ausgebildet ist, dass sich die Mutter (M) darin mit einer Komponente senkrecht zur axialen Richtung der zugehörigen Schraube verschieben lässt.

## Claims

1. A position measuring device for determining the position of two component assemblies (B1, B2), which are movable relative to one another, comprising
- a first support (G) for accommodating a material measure (L) of the position measuring device, which is equipped and provided for being fastened to one of the two component assemblies (B2),
- a second support (F) for accommodating a scanner (K) of the position measuring device, which is equipped and provided for being fastened to the other one of the two component assemblies (B1), and
- connecting means (S, M) for fastening the two supports (G, F) to the respective assigned component assembly (B1, B2), wherein
- at least one of the connecting means comprises a screw nut (M), with which a screw (S) can be engaged,
- the screw nut (M) can be inserted into a recess (100) of one of the two supports (G, F),
**characterized by**
a locking element (1, 2, 3, 4, 5, 6, 7, 8), which, in the inserted state, interacts with the screw nut (M), so as to prevent a movement of the screw nut (M) in axial direction (-R) out of the recess (100) to the extent that an insertion of the screw into the screw nut (M) is made possible.

2. The position measuring device according to claim 1, **characterized in that** the locking element is a bracket (1, 2, 3, 4, 5), which covers the recess (100), and **in that** the screw nut (M) is arranged in the recess (100) between a base (115) of the recess (100) and a stop surface (10, 20, 30, 40, 50) of the bracket (1, 2, 3, 4, 5).

3. The position measuring device according to claim 2, **characterized in that** the distance (a) between the base (115) of the recess (100) and the stop surface (10, 20, 30, 40, 50) of the bracket (1, 2, 3, 4, 5) in axial direction is larger than the thickness (d) of the screw nut (M).

4. The position measuring device according to one of the preceding claims 2 or 3, **characterized in that** the bracket (1, 2, 3, 4, 5) is arranged and fixed in the recess (100).

5. The position measuring device according to claim 4, **characterized in that** the bracket (1, 2, 3, 4, 5) is fixed to the wall (115, 116) in particular to an at least partially circumferential inner wall (116) of the recess (100).

6. The position measuring device according to claim 5, **characterized in that** the bracket (1, 2, 3) is pushed against the inner wall (116) of the recess (100) with at least one flange (18, 28, 38) such that it is fixed in the recess (100).

7. The position measuring device according to claim 6, **characterized in that** the bracket (1, 2, 3) is elastically deformable in at least a partial area such that it pushes under prestress against the inner wall (116) of the recess (100) with the respective flange (18, 28, 38).

8. The position measuring device according to claim 6 or 7, **characterized in that** the bracket (1) encompasses at least two angled sections (16), which extend along the inner wall (116) of the recess (100) and **in that** provision is made at the respective angled section (16) for at least one latch (17), which acts on the inner wall (116) of the recess (100) with a flange (18).

9. The position measuring device according to claim 6, **characterized in that** the bracket (2, 3) encompasses a substantially flat base body (20, 30), which is elastically deformed such that it rests under prestress on the inner wall (116) of the recess (100) with at least one outer flange (28, 38).

10. The position measuring device according to claim 4, **characterized in that** the bracket (4, 5) can be positively fixed to the recess (100).

11. The position measuring device according to claim 10, **characterized in that** the bracket (4, 5) can be fixed by to the recess (100) by means of a snap-lock connection (49, 119) and/or by means of a plug connection (53, 113).

12. The position measuring device according to claim 11, **characterized in that** the snap-lock connection comprises at least one snap hook (46), which engages with a snap section (49) into an undercut (119), wherein the at least one snap hook (46) is provided at the bracket (4) and the snap opening (119) is provided at the inner wall (116) of the recess (100).

13. The position measuring device according to claim 10, **characterized in that** at least one journal (53) engages with an assigned hole (113) for fixing the bracket (5) to the recess (100), wherein the journal (53) is provided at the bracket (5) and the hole (113) is provided in the surrounding area of the recess (100).

14. The position measuring device according to one of the preceding claims 2 to 13, **characterized in that**, in a base body (10, 20, 30, 40, 50), the bracket (1, 2, 3, 4, 5) encompasses an elongated hole (15, 25, 35, 45, 55), into which the screw (S) can extend.

15. The position measuring device according to one of the preceding claims 2 to 14, **characterized in that** the bracket (1, 2, 3, 4, 5) is embodied such that it acts as an anti-twist protection, which counteracts a twisting of the screw nut (M) in the recess (100).

16. The position measuring device according to claim 15, **characterized in that** the bracket (1, 2, 3, 4, 5) encompasses means for positively encompassing the screw nut (M).

17. The position measuring device according to claim 1, **characterized in that** the screw nut (M) can be clamped in the recess (100) by means of the locking element (6, 7).

18. The position measuring device according to claim 1, **characterized in that** the locking element (6, 7, 8) is embodied and arranged such that it is already effective in response to the insertion of the screw nut (M) into the recess (100), **in that** the locking element (6, 7, 8) is already attached to the recess (100) or to the screw nut (M) in response to the insertion of the screw nut (M) into the recess (100).

19. The position measuring device according to claim 17 or 18, **characterized in that** the locking element is an elastically resilient means (6, 7), which is arranged between the inner wall (116) of the recess (100) and the outer periphery of the screw nut (M), and by means of which the screw nut (M) can be clamped in the recess.

20. The position measuring device according to claim 19, **characterized in that** the elastically resilient means is an O-ring (6).

21. The position measuring device according to claim 20, **characterized in that** the O-ring (6) is held in a groove (120) in the recess (100) or in a groove (121) in the screw nut (M).

22. The position measuring device according to claim 19, **characterized in that** the elastically resilient means is an elastic coating (7) of the screw nut (M) or of the recess (100).

23. The position measuring device according to claim 1, **characterized in that** the locking element is an elastically resilient element (8), which limits the access opening of the recess (100) for the insertion of the screw nut (M) across the periphery and exerts a resistance on the screw nut (M), which can be overcome, but which releases the periphery of the screw nut (M) when the screw nut is inserted into the recess (100), in response to the insertion of the screw nut (M).

24. The position measuring device according to claim 23, **characterized in that** the elastically resilient element is an O-ring (8).

25. The position measuring device according to claim 24, **characterized in that** the O-ring (8) is held in a groove (121) in the recess (100).

26. The position measuring device according to one of claims 23 to 25, **characterized in that** the distance (a) between the base (115) of the recess (100) and the locking element (8) in axial direction (R) is greater than or equal to the thickness (d) of the screw nut (M).

27. The position measuring device according to one of the preceding claims, **characterized in that** the geometric design of the recess (100) forms an anti-twist protection, which counteracts a twisting of the screw nut (M) in the recess (100).

28. The position measuring device according to one of the preceding claims, **characterized in that** it is embodied as a length measuring device comprising a linear material measure (L).

29. The position measuring device according to claim 28, **characterized in that** the first support is formed by means of a housing (G) of the linear material measure (L) and the second support is formed by means of a mounting base (F), to which the scanner (K, W), which scans the material measure (L), is connected.

30. The position measuring device according to one of the preceding claims, **characterized in that** the recess is embodied so as to be longitudinally extended such that the screw nut (M) can be displaced therein perpendicular to the axial direction of the corresponding screw by means of a component.

## Revendications

1. Dispositif de mesure de position pour la détermination de la position de deux blocs de construction (B1, B2) mobiles l'un par rapport à l'autre, avec
- un premier support (G) destiné à recevoir une mesure matérialisée (L) du dispositif de mesure de position, qui est conçu et prévu pour être fixé à l'un des deux blocs de construction (B2),
- un deuxième support (F) destiné à recevoir une unité de balayage (K) du dispositif de mesure de position, qui est conçu et prévu pour être fixé à l'autre des blocs de construction (B1), et
- des moyens d'assemblage (S, M) pour la fixation des deux supports (G, F) au bloc de construction (B1, B2) respectivement attribué, où
- au moins l'un des moyens d'assemblage comprend un écrou (M) susceptible d'être mis en engagement avec une vis (S),
- l'écrou (M) peut être inséré dans un évidement (100) de l'un des deux supports (G, F),
**caractérisé par**
un élément de verrouillage (1, 2, 3, 4, 5, 6, 7, 8) coopérant avec l'écrou (M) dans l'état inséré pour empêcher un mouvement de l'écrou (M) hors de l'évidement (100) dans la direction axiale (-R) au point de permettre l'insertion de la vis dans l'écrou (M).

2. Dispositif de mesure de position selon la revendication 1, **caractérisé en ce que** l'élément de verrouillage est une attache (1, 2, 3, 4, 5) recouvrant l'évidement (100), et **en ce que** l'écrou (M) est agencé dans l'évidement (100) entre un fond (115) de l'évidement (100) et une surface de butée (10, 20, 30, 40, 50) de l'attache (1, 2, 3, 4, 5).

3. Dispositif de mesure de position selon la revendication 2, **caractérisé en ce que** l'espacement (a) entre le fond (115) de l'évidement (100) et la surface de butée (10, 20, 30, 40, 50) de l'attache (1, 2, 3, 4, 5) est supérieur à l'épaisseur (d) de l'écrou (M) dans la direction axiale.

4. Dispositif de mesure de position selon l'une des revendications précédentes 2 ou 3, **caractérisé en ce que** l'attache (1, 2, 3, 4, 5) est agencée et fixée dans l'évidement (100).

5. Dispositif de mesure de position selon la revendication 4, **caractérisé en ce que** l'attache (1, 2, 3, 4, 5) est fixée à la paroi (115, 116), en particulier à la paroi intérieure (116) au moins partiellement périphérique de l'évidement (100).

6. Dispositif de mesure de position selon la revendication 5, **caractérisé en ce que** l'attache (1, 2, 3) appuie contre la paroi intérieure (116) de l'évidement (100) avec au moins une arête (18, 28, 38) de manière à être fixée dans l'évidement (100).

7. Dispositif de mesure de position selon la revendication 6, **caractérisé en ce que** l'attache (1, 2, 3) est déformable par élasticité dans au moins une région partielle de manière à appuyer avec l'arête respective (18 28, 38) sous précontrainte contre la paroi intérieure (116) de l'évidement (100).

8. Dispositif de mesure de position selon la revendication 6 ou 7, **caractérisé en ce que** l'attache (1) comporte au moins deux sections coudées (16) s'étendant le long de la paroi intérieure (116) de l'évidement (100), et **en ce qu'**au moins une boucle (17) agissant avec une arête (18) sur la paroi intérieure (116) de l'évidement (100) est prévue sur chacune des sections coudées (16).

9. Dispositif de mesure de position selon la revendication 6, **caractérisé en ce que** l'attache (2, 3) comporte un corps de base (20, 30) essentiellement planaire, susceptible d'être déformé par élasticité de manière à s'appliquer avec au moins une arête extérieure (28, 38) sous précontrainte sur la paroi intérieure (116) de l'évidement (100).

10. Dispositif de mesure de position selon la revendication 4, **caractérisé en ce que** l'attache (4, 5) peut être fixée à l'évidement (100) par complémentarité de forme.

11. Dispositif de mesure de position selon la revendication 10, **caractérisé en ce que** l'attache (4, 5) peut être fixée à l'évidement (100) par un assemblage par crantage (49, 119) et/ou par un assemblage par emboîtement (53, 113).

12. Dispositif de mesure de position selon la revendication 11, **caractérisé en ce que** l'assemblage par crantage comprend au moins un crochet de crantage (46) s'engageant avec une section de crantage (49) dans une contre-dépouille (119), l'au moins un crochet de crantage (46) étant prévu sur l'attache (4) et l'ouverture de crantage (119) étant prévue dans la paroi intérieure (116) de l'évidement (100).

13. Dispositif de mesure de position selon la revendication 10, **caractérisé en ce que** pour la fixation de l'attache (5) à l'évidement (100), au moins un pivot (53) s'engage dans un trou (113) correspondant, le pivot (53) étant prévu sur l'attache (5) et le trou (113) étant prévu dans l'environnement de l'évidement (100).

14. Dispositif de mesure de position selon l'une des revendications précédentes 2 à 13, **caractérisé en ce que** l'attache (1, 2, 3, 4, 5) comporte un trou oblong (15, 25, 35, 45, 55) dans un corps de base (10, 20, 30, 40, 50), dans lequel peut être introduite la vis (S).

15. Dispositif de mesure de position selon l'une des revendications précédentes 2 à 14, **caractérisé en ce que** l'attache (1, 2, 3, 4, 5) est conçue de manière à agir comme moyen de blocage en rotation agissant contre une rotation de l'écrou (M) dans l'évidement (100).

16. Dispositif de mesure de position selon la revendication 15, **caractérisé en ce que** l'attache (1, 2, 3, 4, 5) comporte des moyens pour entourer l'écrou (M) par complémentarité de forme.

17. Dispositif de mesure de position selon la revendication 1, **caractérisé en ce que** l'écrou (M) peut être serré dans l'évidement (100) au moyen de l'élément de verrouillage (6, 7).

18. Dispositif de mesure de position selon la revendication 1, **caractérisé en ce que** l'élément de verrouillage (6, 7, 8) est conçu et agencé de manière à être actif dès l'insertion de l'écrou (M) dans l'évidement (100), du fait que l'élément de verrouillage (6, 7, 8) est fixé à l'évidement (100) ou à l'écrou (M) dès l'insertion de l'écrou (M) dans l'évidement (100).

19. Dispositif de mesure de position selon la revendication 17 ou 18, **caractérisé en ce que** l'élément de verrouillage est un moyen déformable par élasticité (6, 7) agencé entre la paroi intérieure (116) de l'évidement (100) et le pourtour extérieur de l'écrou (M) et permettant de serrer l'écrou (M) dans l'évidement.

20. Dispositif de mesure de position selon la revendication 19, **caractérisé en ce que** le moyen déformable par élasticité est un anneau torique (6).

21. Dispositif de mesure de position selon la revendication 20, **caractérisé en ce que** l'anneau torique (6) est maintenu dans une rainure (120) dans l'évidement (100) ou dans une rainure (121) dans l'écrou (M).

22. Dispositif de mesure de position selon la revendication 19, **caractérisé en ce que** le moyen déformable par élasticité est un revêtement élastique (7) de l'écrou (M) ou de l'évidement (100).

23. Dispositif de mesure de position selon la revendication 1, **caractérisé en ce que** l'élément de verrouillage est un élément déformable par élasticité (8) délimitant l'ouverture d'accès de l'évidement (100) pour l'insertion de l'écrou (M) sur le pourtour et exerçant sur l'écrou (M) une résistance susceptible d'être surmontée, pendant de l'insertion de l'écrou (M), mais libérant l'écrou (M) sur son pourtour une fois que l'écrou est inséré dans l'évidement (100).

24. Dispositif de mesure de position selon la revendication 23, **caractérisé en ce que** l'élément déformable par élasticité est un anneau torique (8).

25. Dispositif de mesure de position selon la revendication 24, **caractérisé en ce que** l'anneau torique (8) est maintenu dans une rainure (121) dans l'évidement (100).

26. Dispositif de mesure de position selon l'une des revendications 23 à 25, **caractérisé en ce que** l'espacement (a) entre le fond (115) de l'évidement (100) et l'élément de verrouillage (8) est supérieur ou égal à l'épaisseur (d) de l'écrou (M) dans la direction axiale (R).

27. Dispositif de mesure de position selon l'une des revendications précédentes, **caractérisé en ce que** la conception géométrique de l'évidement (100) forme un moyen de blocage en rotation agissant contre une rotation de l'écrou (M) dans l'évidement (100).

28. Dispositif de mesure de position selon l'une des revendications précédentes, **caractérisé en ce qu'**il est conçu comme un dispositif de mesure de longueur avec une mesure matérialisée linéaire (L).

29. Dispositif de mesure de position selon la revendication 28, **caractérisé en ce que** le premier support est formé par un boîtier (G) de la mesure matérialisée linéaire (L), et le deuxième support est formé par un pied de montage (F) auquel est reliée l'unité de balayage (K, W) balayant la mesure matérialisée (L).

30. Dispositif de mesure de position selon l'une des revendications précédentes, **caractérisé en ce que** l'évidement est conçu étendu en longueur, de sorte que l'écrou (M) peut être déplacé dans celui-ci avec une composante perpendiculairement à la direction axiale de la vis correspondante.
